# EUROPÄISCHE PATENTSCHRIFT

(11) **EP 2 505 336 B1**
(45) Veröffentlichungstag und Bekanntmachung des Hinweises auf die Patenterteilung: **07.10.2015**
(21) Anmeldenummer: 12161379.8
(22) Anmeldetag: 27.03.2012
(51) Int. Cl.: B29C 49/58, B29C 49/42, B29C 49/76, B29C 49/78

(54) **Antriebseinrichtung für den Blasdorn einer Blasformmaschine**
Drive device for the blowing mandrel of a blow moulding device
Dispositif d'entraînement pour la canne de soufflage d'une machine de formage par soufflage

(30) Priorität: 31.03.2011 DE 102011015672
(43) Veröffentlichungstag der Anmeldung: 03.10.2012
(73) Patentinhaber: Hesta Blasformtechnik GmbH&Co. KG, 73037 Göppingen (DE)
(72) Erfinder: Beck, Eberhard, 72622 Nürtingen (DE)
(74) Vertreter: Reule, Hanspeter

(56) Entgegenhaltungen:
- EP-A2- 0 265 713
- EP-A2- 0 767 045
- EP-A2- 1 959 146
- WO-A1-01/62472
- WO-A2-2008/022612
- DE-A1- 19 846 594
- FR-A1- 2 543 879
- JP-A- 7 227 902
- US-A- 3 657 406
- US-A1- 2008 254 160

## Beschreibung

Die Erfindung betrifft eine Antriebseinrichtung für den Blasdorn einer zur Herstellung insbesondere flaschenförmiger Kunststoffhohlkörper dienenden Blasformmaschinegemäß Oberbegriff des Anspruchs 1. Aus der DE 44 43 194 A1 ist eine Antriebseinrichtung bekannt, in deren Blaskonfiguration der Halsbereich zur Kalibrierung außenseitig durch Formelemente der Blasform, innenseitig durch eine Blasdornspitze und stirnseitige durch eine radiale Stirnfläche eines die Blasformspitze tragenden Blasdornoberteils berandet ist, das über die genannte Ringstirnfläche an die Blasdornspitze des Blasdorns anschließt, der mittels der Antriebseinrichtung in die dem geschlossenen Zustand der Form entsprechende Blasposition verfahrbar ist, in welcher der Blasdorn mit einer kreisförmigen Quetschkante gegen eine sich nach oben erweiternde konische Fläche der Blasform gedrängt und mit dieser in Anlage gehalten ist und aus dieser auch wieder zurückziehbar ist, wobei diese konische Fläche von einem den radial äußeren Bereich des Flaschenhalses formenden Kanal der Blasform ausgeht, dessen Durchmesser um ca. 0,1 mm kleiner ist als der Durchmesser der Quetschkante des Blasdornoberteils.

Die bekannte Antriebseinrichtung ist in der Art eines Spindeltriebes realisiert, der, einerseits, einen Eilgangbetrieb mit relativ hoher Vorschubgeschwindigkeit jedoch relativ niedriger Vorschubkraft und, andererseits, einen Lastgangbetrieb mit reduzierter Vorschubgeschwindigkeit jedoch erhöhter Vorschubkraft ermöglicht. Der hierfür erforderliche konstruktive Aufwand ist erheblich.

Die nicht vorveröffentliche deutsche Patentanmeldung Nr. 10 2009 060 496.0 beinhaltet in Verbindung mit einem Schließantrieb für die zweiteilige Blasform einer Blasformmaschine, bei dem ein mittels eines hydraulischen Puffers gleichsam stoßgedämpfter Kurbeltrieb als Antriebselement vorgesehen ist, den Vorschlag, dieses vergleichsweise einfache Antriebskonzept auch für den Blasdornvorschub im Kalibrierbereich eines flaschenförmigen Formhohlkörpers einzusetzen, ohne jedoch weitere Hinweise für die Gestaltung des Gesamtantriebes anzugeben.

Aus der EP 0 265 713 A2 ist eine Antriebseinrichtung der eingangs genannten Art bekannt, bei der die Längenveränderung des Schübelements mittels einer Verstellschraube vorgenommen wird. Dies bedingt, dass die Einstellung der Länge des Schubelements vor dem ersten Arbeitshub bereits sehr genau vorgenommen werden muss. Die US 2008/0254160 A1 offenbart eine weitere Antriebseinrichtung für einen Blasdorn.

Der Erfindung liegt daher die Aufgabe zugrunde, unter Ausnutzung eines Kurbeltriebes als Antriebselement einen Antrieb für einen Blasdorn einer Blasformmaschine zu schaffen, der bei gleichwohl einfachem Aufbau eine zuverlässige Funktion und hohe Standzeit der Maschine vermittelt; des Weiteren soll die Antriebseinrichtung mit vergleichsweise kurzen Rüstzeiten die Einstellung der Blasformmaschine auf die jeweils herzustellenden Hohlkörper ermöglichen.

Diese Aufgabe wird, entsprechend dem Grundgedanken der Erfindung durch die kennzeichnenden Merkmale des Patentanspruchs 1 und in vorteilhaften und zweckmäßigen Ausgestaltungen desselben durch die Merkmale der weiteren Ansprüche 2 bis 10 gelöst.

Hiernach ist das Gleitstück des als Antriebselement vorgesehenen Kurbel- oder Exzentertriebs mittels eines längenveränderlichen Schubelements mit einem den Blasdorn tragenden Blaskopf verbunden, wodurch auf einfache Weise, nämlich durch Veränderung der Länge dieses Schubelements die Kraft vorgebbar, d. h. produktspezifisch einstellbar ist, mit der die Quetschkante des Blasdornoberteils während des Blasens des jeweiligen Formhohlkörper an die konische Fläche der Blasform angedrückt gehalten ist.

In Kombination hiermit wird durch die Anordnung von Axialführungselementen, zwischen denen das Schubelement angeordnet ist, eine leichtgängige und genaue Führung des Blasdorns erzielt, die sowohl den Verschleiß der Antriebseinrichtung mindert als auch die Qualität des Produkts fördert.

Bei dem Schubelement, das einen als Hydrozylinder mit durch Druckbeaufschlagung eines Antriebsdruckraumes einstellbarer effektiver Länge aufweist, wie im Kennzeichenteil des Anspruchs 1 beschrieben, d. h. einen einstellbaren Abstand des Blaskopfes von z. B. der Drehachse des rotatorischen Antriebselements des Blasdornantriebes aufweist, besteht eine besonders einfache Möglichkeit der Einstellung der Länge des Schubelementes darin, dass ein Umschaltventil vorgesehen ist, mittels dessen ein Druckraum des Hydrozylinders absperrbar ist, aus dem bei einer Längeneinstellung Druckmedium entweicht.

In Kombination hiermit ist es im Sinne einer einfachen Gestaltung des Antriebes insgesamt besonders vorteilhaft, wenn, wie gemäß Anspruch 5 vorgesehen, der Hydrozylinder als doppelt wirkender Differenzialzylinder ausgebildet ist. Hierbei ist zweckmäßigerweise die einseitig aus dem Gehäuse herausragende Kolbenstange mit dem Blaskopf verschiebefest verbunden, und es ist dann der stangenseitige Druckraum ventilgesteuert absperrbar.

Eine steuerungstechnisch besonders einfache und betriebssichere Gestaltung der Antriebsvorrichtung ist durch die Merkmale des Anspruchs 7 angegeben, wobei der Hydrozylinder als Gleichlaufzylinder ausgebildet ist und eine vergleichsweise schwache Feder genügt, dessen Kolben in einer definierten Position zu halten.

Zum Anfahren einer erwünschten Position des Blasdorns, sei es im Sinne des Anfahrens der Blasposition oder der Rückkehr in eine Ausgangsposition, in der die Blasdornspitze sich außerhalb der Blasform befindet, ist es besonders vorteilhaft, wenn ein elektronischer oder elektromechanischer Wegoder Drehstellungsgeber vorgesehen ist, dessen Ausgangssignal ein Maß z. B. für die auf eine Referenzebene bezogene Winkelstellung der Kurbel der Antriebseinrichtung ist, so dass auch die Möglichkeit einer präzisen Nachjustierung ausgewählter Positionen des Blaskopfes gegeben ist.

Besonders zweckmäßig ist es weiter, wenn ein elektronischer oder elektromechanischer Drucksensor vorgesehen ist, mittels dessen der Druck in mindestens einem der Druckräume des Hydrozylinders erfassbar ist, wodurch sich auf einfache Weise zuverlässige Information über den Betriebszustand und die Betriebssicherheit der Blasformmaschine gewinnen lässt.

Mittels eines manuell oder elektrisch steuerbaren Umschaltventils, wie gemäß Anspruch 11 vorgesehen, sind auf einfache Weise, handgesteuert oder automatisch, je nach Art der Betätigung des Umschaltventils, charakteristische und für die Funktion der Antriebseinrichtung geeignete Konfigurationen derselben einsteuerbar.

In der bevorzugten Ausgestaltung der Antriebseinrichtung gemäß Anspruch 12 wird durch einen hydraulischen Druckspeicher eine die Maschine gegen Beschädigung schützende Pufferwirkung erzielt.

Weitere Einzelheiten der erfindungsgemäßen Antriebseinrichtung sowie von Vorgehensweisen zur Einstellung von Einrichtschüben der Blasformmaschine ergeben sich aus der nachfolgenden Beschreibung eines speziellen Ausführungsbeispiels der Antriebseinrichtung und ihrer Benutzung anhand der Zeichnung. Es zeigen:
- Fig. 1: eine schematisch vereinfachte Darstellung der Kalibrierstation einer Blasformmaschine mit einer erfindungsgemäßen Antriebseinrichtung für den Blasdorn der Maschine und
- Fig. 2a und 2b: Einzelheiten von Schubelementen der Antriebseinrichtung gemäß Fig. 1, die die Antriebskopplung eines SchubkurbelTriebes mit dem translatorisch verschiebbaren Blasdorn der Blasformmaschine vermitteln.

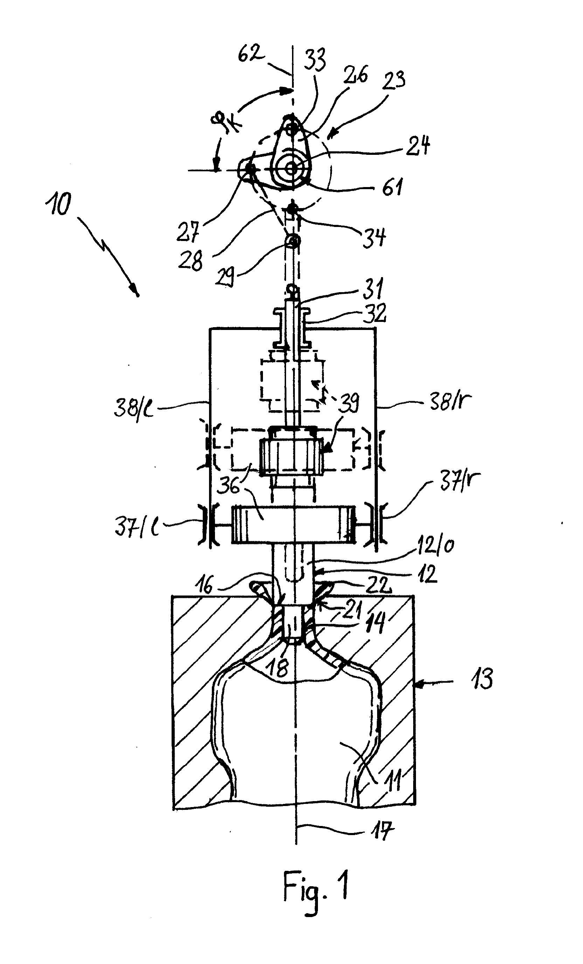

Die in der Fig. 1 insgesamt mit 10 bezeichnete Antriebseinrichtung ist bei einer für die Herstellung flaschenförmiger Kunststoffhohlkörper 11 konzipierten Blasformmaschine als sogenannter Kalibrierantrieb für die Steuerung von Vorschub- und Rückzugsbewegungen eines insgesamt mit 12 bezeichneten Blasdorns gedacht, über den Druckluft in einen von einer insgesamt mit 13 bezeichneten Blasform aufgenommenen, noch in thermischplastifiziertem Zustand befindlichen Vorformling einblasbar ist, der dadurch in die durch die Blasform gleichsam als "Negativ" vorgegebene Form aufblasbar ist.

Die im Blasverfahren hergestellten Kunststoffflaschen sind vielfach mit Schraubverschlüssen versehen, was im Halsbereich 14 der Hohlkörper 11 eine sehr genaue Einhaltung von Dimensionstoleranzen, d.h. eine genaue Kalibrierung dieses Halsbereiches erfordert, auf den Verschlusskappen mit genormten Innengewinden aufschraubbar sein müssen.

Der diesbezüglichen Forderung ist insbesondere durch eine exakte Formgebung der Blasform im Halsbereich des Kunststoffhohlkörpers 11 Rechnung zu tragen. Innenseitig erfolgt die Kalibrierung des Halsbereiches14 des Kunststoffhohlkörpers 11 dadurch, dass der Blasdorn 12, von einer oberen Endstellung als Ausgangsstellung ausgehend, in der die Blasform 13, die an einer - nicht dargestellten - Extrusionsstation der Blasformmaschine schon einen schlauchförmigen Vorformling aufgenommen hat und zwischenzeitlich geschlossen und zu der Kalibrierstation verfahren worden ist, in die in ausgezogenen Linien dargestellte Blaskonfiguration abgesenkt wird, in der sodann der Formhohlkörper durch Einleiten der Druckluft in den Innenraum des Vorformlings aufgeblasen wird.

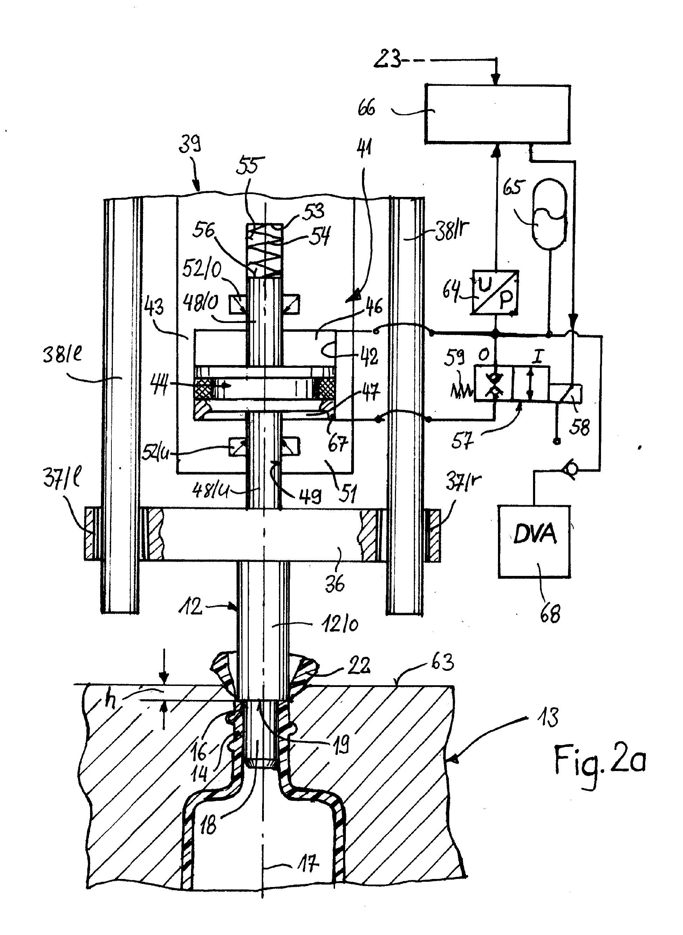

Die Blaskonfiguration von Blasdorn 12 und Blasform 13, zu deren Erläuterung nunmehr auch auf Einzelheiten der Fig. 2a Bezug genommen sei, ist erreicht, sobald ein äußerlich zylindrisches Blasdornoberteil 12/o an das sich, abgesetzt durch eine kreisringförmige Stirnfläche 16 in koaxialer Anordnung bezüglich der zentralen Längsachse 17, die außen zylindrische Blasdornspitze 18 anschließt, mit einer kreisförmigen Quetschkante 19 an einer sich nach oben erweiternden konischen Kegelstumpf-Mantelfläche 21 abstützt und dadurch den - kalibrierten - Flaschenhalsbereich 14 gegen eine kragenförmigen Rand 22 überständigen Kunststoffmaterials abgrenzt, der nach dem Blasvorgang allenfalls noch über filmartig dünne Bereiche mit dem Flaschenhals in Verbindung stehen kann und von dem solchermaßen vorgefertigten Formhohlkörper auf einfache Weise, z.B. an einer nicht dargestellten Entbutzungsstation der Blasformmaschine entfernt werden kann.

Als Antriebselement der Antriebseinrichtung 10 ist ein insgesamt mit 23 bezeichneter Schubkurbeltrieb für sich bekannten Aufbaues und bekannter Funktion vorgesehen, der oberhalb der Blasform 13 derart angeordnet ist, dass die Drehachse 24 seiner lediglich schematisch angedeuteten Kurbel 26 die zentrale Achse 17 der Kalibrierstation schneidet und gemäß der Darstellung der Fig. 1 senkrecht zu dieser verläuft.

Die Kurbel ist über das Kurbelgelenk 27 des Schubkurbeltriebs mit dessen Schubstange 28 kinematisch verbunden, die ihrerseits über das Pleuelgelenk 29 mit dem Gleitstück 31 des Kurbeltriebes 23 kinematisch gekoppelt ist, das in einer gestellfesten Vertikalführung 32 auf- und abverschiebbar geführt ist, wobei der maximale Hub, den das Gleitstück 31 ausführen kann, dem Abstand zwischen dem oberen Totpunkt 33 und dem unteren Totpunkt 34 der Bewegung des Kurbelgelenks 27 entspricht; dasselbe gilt sinngemäß für die vertikalen Hübe, die der Blasdorn 12 als abwärts gerichtete Zustellbewegungen und als aufwärts gerichtete Rückzugsbewegungen ausführen kann.

Der Blasdorn 12 ist an der Unterseite eines der Einfachheit der Darstellung halber als kreisringförmiger Block dargestellten, insgesamt mit 36 bezeichneten Blaskopfes angeordnet, der mittels symmetrisch bezüglich der zentralen Achse 17 angeordneter blockseitiger Gleitführungselemente 37/1 und 37/r an als Führungsstangen dargestellten gehäusefesten Führungselementen 38/1 und 38/r gleitend verschiebbar gelagert ist, wobei der Blaskopf 36 mittels eines insgesamt mit 39 bezeichneten Schubelements zug- und schubfest mit dem Gleitstück 31 des Kurbeltriebs 23 verbunden ist und dadurch dessen Auf- und Abbewegungen mit ausführt.

Das Schubelement 39 ist so ausgebildet, dass seine in Richtung der zentralen Längsachse 17 gemessene Länge innerhalb eines Variationsbereiches von z.B. einigen cm definiert einstellbar und dadurch bedarfsgerecht vorgebbar ist, je nachdem, wie hoch die Blasform 13 ist und demgemäß der Abstand des Blaskopfes 36 von der Blasform 13 in der Blaskonfiguration, einerseits, und in der Entnahme-Konfiguration, andererseits, sein muss, um einen Formhohlkörper 11 vorgegebenen Größe auf der Maschine fertigen zu können; hierbei ist insbesondere dem Umstand Rechnung zu tragen, dass die Quetschkante 19 (Fig. 2a) des Blasdorns 12 während des Blasvorganges mit einer Mindestkraft, die im Bereich von 10.000 N liegen kann, an die konische Mantelfläche 21 der Blasform 13 angedrückt gehalten wird.

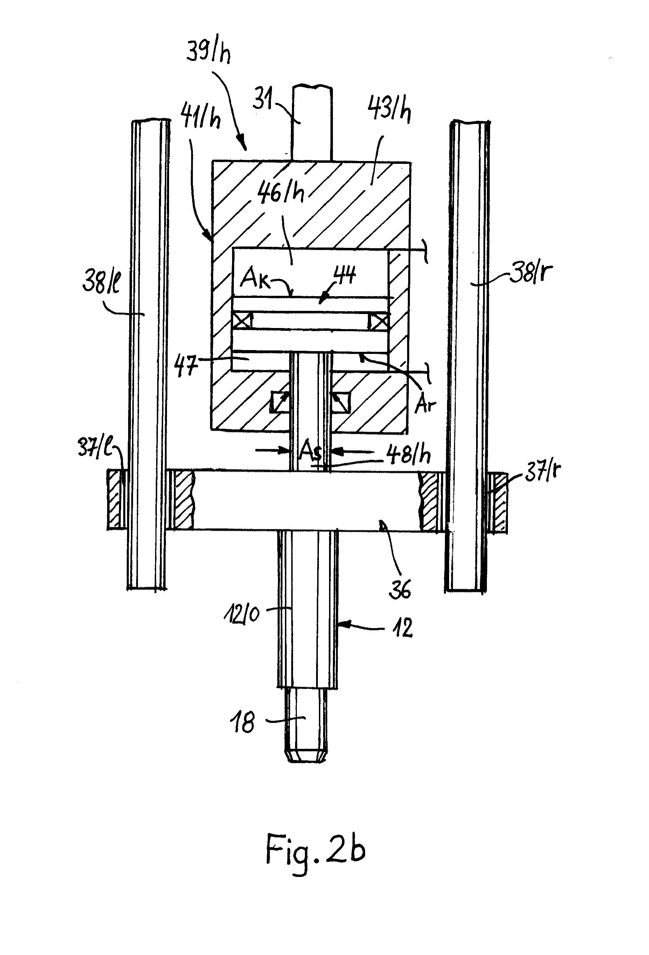

Zur Implementierung diesbezüglicher Wähl- und Vorgabemöglichkeiten bei dem zur Erläuterung gewählten Ausführungsbeispiel ist das Schubelement 39 mittels eines linearen Hydrozylinders 41 realisiert, der mit qualitativ der der Figur 2 entnehmbaren Gestaltung und Anordnung koaxial mit der zentralen Längsachse 17 der Antriebseinrichtung 10 zwischen den Kurbeltrieb 23 und den Blaskopf 36 der Blasformmaschine eingefügt ist.

In dem Hydrozylinder 41 sind durch einen in einer zentralen Bohrung 42 des Zylindergehäuses 43 druckdicht verschiebbaren Kolben 44 ein oberer Druckraum 46 und ein unterer Druckraum 47 gegeneinander abgegrenzt, durch deren vollständige Verfüllung mit Hydraulikmedium und Absperrung gegeneinander der Kolben 44 in der solchermaßen definierten Einstellung statisch fixiert ist.

Von dem Kolben 44 geht eine untere Kolbenstange 48/u aus, die durch eine Bohrung 49 der blaskopfseitigen Stirnwand 51 des Zylindergehäuses gleitfähig abgedichtet hindurchtritt und mit dem Blaskopf 36 fest verbunden ist, wodurch dieser unmittelbar mit dem Kolben 44 und mittelbar über diesen mit dem Zylindergehäuse 43 zug- und schubfest verbunden ist, wenn der Kolben 44 seinerseits gegen Verrückungen innerhalb der Gehäusebohrung 42 gesichert ist.

An der der unteren Kolbenstange gegenüberliegenden Seite und koaxial mit dieser verlaufend ist eine obere Kolbenstange 48/o vorgesehen, die in eine Sackbohrung 51 des Zylindergehäuses 46 eintaucht und gegen diese mittels einer Gleitdichtung 52/o abgedichtet ist.

Am Boden 53 der Sackbohrung 51 ist axial eine Druckfeder 54 abgestützt, die andererseits an der Stirnfläche 56 der oberen Kolbenstange 48/o angreift und, unter einer mäßigen Vorspannung stehend, auf den Kolben 44 eine zum Blaskopf hin gerichtete Kraft ausübt, die ausreichend ist, den Kolben 44 in seine untere Endstellung zu verschieben, wenn die Druckräume 46 und 47 kommunizierend miteinander verbunden sind. Der hierbei eingenommenen "Grund"-Stellung des Kolbens entspricht die Konfiguration größter Länge des Schubelements 39 und damit die tiefstmögliche Anordnung des Kalibrierbereiches eines herzustellenden Hohlkörpers11, der unter Verwendung der Antriebseinrichtung 10 mit einer mit dieser bestückten Blasformmaschine herstellbar ist.

Die obere Endstellung des Kolbens 44, die z. B. durch die Block-Konfiguration der Druckfeder 54 oder die Anlage des Kolbens 44 an der oberen Begrenzungsfläche 46/o des oberen Druckraumes 46 markiert sein kann, entspricht der geringsten wirksamen Länge des Schubelements 39 und insoweit der höchstmöglichen Anordnung der Blasformoberseite.

Eine Fixierung des Kolbens 44, sowohl in den erläuterten End-Stellungen als auch in den Zwischenstellungen des Kolbens, mit denen verschiedene effektive Längen des Hydrozylinders 41 und damit des Schubelements 39 verknüpft sind, erfolgt bei dem zur Erläuterung dargestellten Ausführungsbeispiel durch Absperrung der Druckräume 46 und 47 gegeneinander, was in der Grundstellung 0 eines als 2/2-Wege-ausgebildeten Magnetventils 57 der Fall ist, das im stromlosen Zustand seines Steuermagneten 58 durch eine Ventilfeder 59 in seine sperrende Grundstellung 0 geschaltet ist, in der die Druckräume 46 und 47 des Hydrozylinders 41 gegeneinander hermetisch abgesperrt sind und dadurch der Kolben 44 fixiert ist, dies natürlich unter der Voraussetzung, dass die obere Gleitdichtung 42/o und die untere Gleitdichtung 52/u, mittels derer die beiden Kolbenstangen 48/o und 48/u gegen das Gehäuse 46 des Hydrozylinders 41 abgedichtet sind, absolut dicht sind, zumindest jedoch mit einem so geringen Leckverlust behaftet sind, dass über eine Vielzahl von Arbeitszyklen hinweg von deren Dichtigkeit ausgegangen werden kann.

Für den Bedarfsfall vorgesehene Einrichtungen, mittels derer ein Leckölverlust in den Druckräumen 46 und 47 ausgeglichen werden kann, sind, der Einfachheit halber, nicht dargestellt; ihre bedarfsweise Realisierung ist dem Fachmann jedoch bei Kenntnis des Problems aufgrund seines Fachwissens ohne weiteres möglich.

Als Element einer Sensorik, mittels derer Funktionszustände der Antriebseinheit 10 sowie Bewegungphasen der Antriebseinrichtung erfassbar sind, ist ein schematisch dargestellter Winkelstellungsgeber 61 (Fig. 1) vorgesehen, der ein elektrisches Ausgangssignal erzeugt, das, gesehen in Richtung der Drehachse 24 der Kurbel 26, ein Maß für deren azimutale Auslenkung ϕ_{K} gegenüber derjenigen Position ist, in der sich das Kurbelgelenk 27 des Kurbeltriebes 23 in dessen oberem Totpunkt 33 befindet; der Winkelstellungsgeber 61 ist als Absolutgeber ausgebildet, der die Richtung der Kurbel bezüglich einer Referenzebene erkennt, z.B. der Ebene 62, die durch die Drehachse 24 der Kurbel 23 und die zentrale Längsachse 17 der Antriebseinrichtung 10 aufgespannt ist.

Das Ausgangssignal des Winkelstellungsgebers 61 ist in Verbindung mit den geometrischen Abmessungen der mechanischen Elemente der Antriebseinrichtung und Kenntnis des Abstandes der Drehachse 24 des Kurbeltriebes 23 von einer Referenzebene der als ortsfest anzusehenden Blasform 13, z.B. des Abstandes von der oberen, als horizontal verlaufend vorausgesetzten Begrenzungsfläche 63 der Blasformhälften, in Einheiten der Position des Blasdorns 12, insbesondere der Position seiner Quetschkante 19 auswertbar, durch deren Anlagen an der konischen Fläche 21 der Blasform die Blasposition des Blasdorns 12 markiert ist.

Als weiteres Element der genannten Sensorik ist ein elektrischer oder elektromechanischer Druckgeber 64 (Fig. 2a) vorgesehen, der ein elektrisches Ausgangssignal erzeugt, das ein Maß für den im oberen Druckraum 46 des Hydrozylinders 41 herrschenden Druck ist, dem das druckempfindliche Sensorelement des Druckgebers 64 ausgesetzt ist.

Aus einer Verarbeitung dieser Signale mittels einer lediglich schematisch angedeuteten elektronischen Steuereinheit 66 der Blasformmaschine, z.B. einer differenzierenden Verarbeitung des Winkelstellungssignals, das jeweils die Momentanlage der Kurbel repräsentiert, ist auch die Geschwindigkeit erfassbar, mit der sich der Blasdorn 12 bewegt und natürlich auch die Position vorgebbar, die der Anlage der Quetschkante 19 des Blasdorns 12 an der konischen Anlagefläche 21 der Blasform entspricht. Hierbei sind die winkelstellungscharakteristischen Signale als Istwert-Rückmeldung für eine durch Sollwertsignale, die dem Antriebsmotor der Kurbel zugeleitet werden, gesteuerte Bewegung des Blaskopfes nutzbar.

Die insoweit anhand ihres Aufbaus sowie der Funktion einzelner Komponenten erläuterte Antriebseinrichtung 10 kann in einer typischen Vorgehensweise wie folgt auf eine große Stückzahlen beinhaltende Produktion eines speziellen Formhohlkörpers vorbereitet, d.h. so eingerichtet werden, dass die Produktion z.B. über einen Tag hinweg, im Sekundentakt möglich ist, ohne dass in nennenswertem Umfang Störungen zu erwarten sind:
In einem ersten Schritt wird das Umschaltventil 57 in seine Stellung 1, die Durchflussstellung geschaltet, wodurch kommunizierende Verbindung der beiden Druckräume 46 und 47 des Hydrozylinders 41 hergestellt und Druckgleichheit in den beiden Druckräumen erzielt wird. Die Folge hiervon ist, dass der Kolben 44 durch die Wirkung der mäßig vorgespannten Druckfeder 54 in seine untere Endstellung verschoben wird, in der sich der Kolben 44 z.B. über einen unteren Stützring 67 an der unteren, ringförmigen Bodenfläche 47/u des unteren Druckraumes 47 des Hydrozylinders 41 abstützt. Diese Position des Kolbens 44 entspricht der Konfiguration größter axialer Ausdehnung des den Hydrozylinder 41 umfassenden Schubelements 39.

In einem zweiten Schritt wird durch geeignete Ansteuerung des elektrischen Antriebsmotors des Kurbeltriebes 23 dieser in eine "obere" Extremalposition gefahren, die dem größtmöglichen Abstand der Blasdornspitze von der Blasform 13 entspricht, mit der auch die obere Totpunkt-Stellung der Kurbel 26 des Schubkurbeltriebs 23 verknüpft ist.

Sodann wird durch Aktivierung des Schubkurbeltriebes 23 der Blaskopf 36, der über das Schubelement 41 mit dem Gleitstück 31 des Kurbeltriebs 23 zug- und schubfest gekoppelt ist, soweit abgesenkt, bis das Blasdornoberteil 12/o mit seiner kreisförmigen Quetschkante 19 an der konischen Mantelfläche 21 anliegt, die im Halsbereich der Blasform an deren den Flaschenhals berandenden Formbereich anschließt.

Diese Absenkung des Blasdorns 12 erfolgt in einem Betriebsmodus der Antriebseinrichtung 10, in dem z.B. die Antriebsleistung des Elektromotors, der die Kurbel antreibt, so gering gehalten ist, dass der Antrieb beim Auftreffen des Blasdorns 12 auf die Blasform stehen bleibt, ohne dass eine Beschädigung des Blasdorns und/oder der Blasform auftreten könnte. Um diesbezüglichen Schutz zu erreichen, ist es auch möglich, den raschen Anstieg des Ausgangssignals des Druckgebers 64, der mit dem Auftreffen des Blasdorns 12 auf die konische Fläche 21 eintritt, zum Ausschalten des Antriebsmotors des Schubkurbeltriebes 23 auszunutzen, um automatisch die rechtzeitige Stillsetzung des Blasdorns in seiner Anlageposition zu erreichen.

Zweckmäßigerweise wird jetzt das Umschaltventil 57 geschlossen, um den Kolben 44 in seiner unteren Endstellung innerhalb des Hydrozylinders 41 hydraulisch zu verriegeln. Hiernach wird der Blasdorn 12 durch Ansteuerung des Kurbeltriebes 23 wieder soweit nach oben gefahren, bis die Blasdornspitze 18 soweit oberhalb der Blasform angeordnet ist, dass diese geöffnet und der fertige Formhohlkörper 11 aus der Blasform, gegebenenfalls nach Abschlagen des abgequetschten überstehenden Materials, entnommen werden könnte. Diese Position des Blasdorns und die damit verknüpfte Konfiguration des Kurbeltriebes 23 insgesamt ist in der Fig. 1 gestrichelt angedeutet.

Für das vorausgehend Erläuterte sei - stillschweigend - vorausgesetzt, dass der Kurbeltrieb 23, wenn der Blaskopf 36 sich in seiner am weitesten abgesenkten Position befindet, selbst nicht seine untere Totpunktstellung einnimmt, sondern das Kurbelgelenk sich noch in einem signifikanten Abstand von derselben "oberhalb" der UT-Position befindet. Hierdurch ist für die Produktionszyklen, die etwa im Sekundentakt erfolgen sollen, die Möglichkeit gegeben, durch ein weiteres Drehen des Kurbeltriebes über die im Einrichtungsbetrieb ermittelte Anlageposition hinaus - im Sinne einer Absenkung des Blasdorns - die Kraft zu erhöhen, mit der der Blasdorn 12 auf die konische Gegenfläche 21 der Form drückt, um dadurch einen zuverlässigen Formenschluss zu erzielen; dies kann für den Fall bedeutsam sein, dass die Materialdicke des extrudierten Vorformlings und damit auch die zum Abquetschen überstehenden Materials im Halsbereich erforderliche Quetschkraft variieren kann, die vom Kurbeltrieb 23 aufgebracht werden muss.

In einer zweckmäßigen Vorgehensweise kann zum Auffinden der Anlageposition des Blasdornoberteils 12/o an der konischen Fläche der Blasform auch eine Position des Kolbens 44 gewählt werden, in der dieser sowohl von der unteren Druckraumbegrenzungsfläche 47/u als auch von der oberen Druckraumbegrenzungsfläche 48/o einen deutlichen Abstand hat, damit nach einem Auffinden der Anlageposition und der Fixierung des Kolbens durch Schließen des Umschaltventils 57 eine Einstellung erwünschter Schließkräfte zum einen durch ein Absenken der Position des Kolbens 44 und zum anderen durch eine Anhebung der Kolbenposition möglich ist.

Um alternativ oder zusätzlich zu einer von einer Bedienungsperson der Maschine durchzuführenden Einrichtung derselben auf das herzustellende Produkt, eine solche im Zuge einer länger dauernden Produktionsphase von Zeit zu Zeit überprüfen und erforderlichenfalls automatisch korrigieren zu können, ist ein Druckspeicher 65 (Fig.2a) geeignet, in den bei einem Auftreffen des Blasdorns 12 auf die Blasform 13 aus dem oberen Druckraum 46 des Hydrozylinders 41 Hydraulikmedium übertreten kann. Ein zur Aufladung des Druckspeichers 65 dienendes, lediglich schematisch dargestelltes Druckversorgungsaggregat 67 kann sowohl zur Druckvorgabe als auch zur Kompensation etwaiger Leckverluste genutzt werden.

Eine geeignete Druck- Vorspannung und Kapazität des Speichers 65 vorausgesetzt, kann dieser die Funktion eines elastischen Puffers vermitteln, durch den die Wirkung einer Kraftbegrenzung und dadurch ein zuverlässiger Schutz der Maschine gegen Beschädigung erzielt wird. In dieser Ausrüstung der Maschine ist diese auch für einen Betrieb mit stets im gleichen Drehsinn angetriebenem Kurbeltrieb geeignet.

Anstelle des Schubelements 39, wie bei der anhand der Fig. 1 und 2a geschilderten, erfindungsgemäßen Antriebseinrichtung zur kinematischen Kopplung des Kurbeltriebs 23 mit dem Blasdorn vorgesehen, kann zum analogen Zweck auch das in der Fig. 2b dargestellte, dort insgesamt mit 39/h bezeichnete Schubelement eingesetzt werden. Dieses Schubelement unterscheidet sich von dem Schubelement 39 gemäß Fig. 2a im Wesentlichen dadurch, dass ein zur "Längen"-Einstellung des Schubelements 39/h vorgesehen linearer Hydrozylinder 41/h als Differentialzylinder mit nur einer einseitig aus dem Zylindergehäuse 43/h austretenden Kolbenstange 48/h ausgebildet ist, die zug- und schubfest mit dem Blaskopf 26 verbunden ist, dessen Ausbildung derjenigen des anhand der Fig. 1 und 2a geschilderten Blaskopfes 26 entspricht.

Soweit für Bau- und Funktionselemente der in der Fig. 2b dargestellten Einrichtung Bezugszeichen angegeben sind, mit denen auch Elemente der Fig. 2a bezeichnet sind, soll dies auf die Bau- und Funktionsanalogie der identisch bezeichneten Elemente hinweisen und insoweit auch auf die anhand der Fig. 2a gegebenen Beschreibungsteile verweisen, um Wiederholungen zu vermeiden.

Durch den Zylinderkolben 44 des Differentialzylinders 41/h ist ein stangenseitiger Druckraum 47, den die Kolbenstange 48/h axial durchsetzt, gegen einen bodenseitigen Druckraum 46/h druckdicht abgegrenzt, wobei die diese Druckräume 47 und 48 beweglich begrenzenden Kolbenflächen, zum einen die Ringfläche Ar, von der die Kolbenstange 48/h ausgeht, und zum anderen die dem Betrag nach entsprechend größere Kreisfläche Ak, sich um den Betrag der Querschnittsfläche As der Kolbenstange 48/h unterscheiden.

Eine Antriebseinrichtung mit einem Schubelement 39/h, wie insoweit anhand der Fig. 2b erläutert, ist zum einen durch eine zweckgerechte Vorgabe der Kolbenflächen Ak und Ar und zum anderen durch Wahl des Betriebsdruckes, insbesondere des Druckes, auf den der Speicher 65 aufgeladen ist, sowie auch durch das im Speicher enthaltene Volumen und in Relation zu diesem das im Verlauf von Arbeitshüben aus dem oberen Druckraum 46/h verdrängbare Volumen des hydraulischen Arbeitsmedium auf vielfältige Weise auf diejenigen Produktionsbedingungen einstellbar, die für die Produktion eines Formhohlkörpers erwünschter Form am besten geeignet erscheinen.

Die Steuerung der Blaszyklen einer Blasformmaschine kann mit Schubelementen 39 bzw. 39/h wie anhand der Fig. 2a und 2b im Einzelnen geschildert, jeweils auf dieselbe Weise, d. h. mit Hilfe der anhand der Fig. 2a geschilderten Sensorik und Steuerungsperipherie der Maschine erfolgen.

Eine zu einer automatischen Steuerung aufeinander folgender Blaszyklen einer mit der erfindungsgemäßen Antriebseinrichtung ausgerichteten Blasformmaschine geeignete Steuereinheit 66, ist in der Fig. 2a schematisch dargestellt.

## Patentansprüche

1. Antriebseinrichtung (10) für den Blasdorn (12) einer zur Herstellung flaschenförmiger Kunststoffhohlkörper dienenden Blasformmaschine, in deren Blaskonfiguration der Halsbereich zur Kalibrierung außenseitig durch Formelemente der Blasform (13), innenseitig durch eine Blasdornspitze (18) und stirnseitig durch eine radiale Stirnfläche (16) eines die Blasdornspitze (18) tragenden Blasdornoberteils (12/0) berandet ist, das über die genannte Stirnfläche an die Blasdornspitze des Blasdorns anschließt, der mittels der Antriebseinrichtung in die dem geschlossenen Zustand der Form zugeordnete Blasposition verfahrbar ist, in der der Blasdorn (12) mit einer kreisförmigen Quetschkante (19) gegen eine sich nach oben erweiternde konische Fläche (21) der Blasform (13) gedrängt ist, die von einem den radial äußeren Bereich des Flaschenhalses formenden Kanal der Blasform ausgeht, dessen Durchmesser geringfügig, z.B. um 0,1 mm, kleiner ist als der Durchmesser der Quetschkante (19) des Blasdornoberteils (12/0), wobei die Antriebseinrichtung die Funktion eines Kurbel- oder eines Exzentertriebes vermittelt, mittels dessen ein den Blasdorn tragendes Gleitstück (31) geführt verschiebbar und dadurch in die Blasposition innerhalb der Blasform einführbar und aus dieser auch wieder zurückziehbar ist, und wobei das Gleitstück (31) ein Teil eines mit dem Blasdorn verschiebefest verbundenen Schubelements (39; 39/h) ist, dessen in Richtung der gemeinsamen zentralen Längsachse (17) von Gleitstück (31) und Blasdorn (12) gemessene axiale Ausdehnung definiert veränderbar und einstellbar ist, derart, dass für die Quetschkraft, mit der die Quetschkante (19) des Blasdornoberteils (12/0) in der Blaskonfiguration der Blasformmaschine gegen die konische Anlagefläche der Blasform (13) gedrückt ist, ein definierter Wert reproduzierbar vorgebbar ist, **dadurch gekennzeichnet, dass** das längenveränderliche Schubelement (39;39/h) zwischen Axialführungselementen (38/1; 38/r) des Blaskopfes angeordnet ist und dass das Schubelement (39;39/h) einen Hydrozylinder (41) mit durch einen Kolben (44) druckdicht gegeneinander abgegrenzten Druckräumen (46 und 47) umfasst, durch dessen steuerbare Verschiebung die effektive Länge des Schubelements (39; 39/h) einstellbar ist.

2. Antriebsvorrichtung nach Anspruch 1, **dadurch gekennzeichnet, dass** zur Fixierung der Länge des Schubelements (39; 39/h) ein Umschaltventil (57) vorgesehen ist, mittels dessen mindestens derjenige Druckraum (46 oder 47) des Hydrozylinders (41; 41/h) absperrbar ist, aus dem bei der Längeneinstellung Druckmedium entweicht.

3. Antriebsvorrichtung nach Anspruch 2, **dadurch gekennzeichnet, dass** der Hydrozylinder (41/h) als Differentialzylinder ausgebildet ist, bei dem die einseitig aus dem Gehäuse herausragende Kolbenstange (48/u) blaskopfseitig angeordnet ist und mindestens der stangenseitige Druckraum (47) ventilgesteuert absperrbar ist.

4. Antriebsvorrichtung nach Anspruch 2, **dadurch gekennzeichnet, dass** der Hydrozylinder (41) als Gleichlaufzylinder ausgebildet ist, bei dem die mit Druck beaufschlagbaren Kolbenflächen (A₁, A₂) des die beiden Druckräume des Zylinders gegeneinander abgrenzenden Kolbens (44) den gleichen Betrag haben.

5. Antriebsvorrichtung nach Anspruch 4, **dadurch gekennzeichnet, dass** der die beiden Druckräume (46 und 47) des Gleichlaufzylinders (41) gegeneinander abgrenzende Kolben (44) mit koaxialen Kolbenstangen (48/o und 48/u) gleichen Querschnitts fest verbunden ist, deren eine zug- und schubfest mit dem Blaskopf (36) verbunden ist und deren zweite gleitfähig gegen eine Bohrung (49) des Gehäuses (43) des Hydrozylinders (41) abgedichtet ist, in der eine Druckwendelfeder (54) angeordnet ist, die auf den Kolben (44) eine im Sinne einer Verschiebung desselben in Richtung auf die Blasform wirkende Kraft ausübt, deren Betrag klein gegen die mittels des Antriebs (23) auf das Zylindergehäuse ausübbare Vorschubkraft ist.

6. Antriebsvorrichtung nach einem der Ansprüche 1 bis 5, **dadurch gekennzeichnet, dass** ein elektronischer oder elektromechanischer Wegsensor vorgesehen ist, mittels dessen die Position des Blaskopfes (36), insbesondere der Abstand der Quetschkante (19) des Blaskopfes (36) von der Anlageposition an der konischen Gegenfläche (21) der Blasform (13) erfassbar ist.

7. Antriebsvorrichtung nach Anspruch 6, **dadurch gekennzeichnet, dass** der Wegsensor mittels eines in das rotatorische Antriebselement integrierten elektronischen oder elektromechanischen Drehstellungsgebers (61) implementiert ist, dessen Ausgangssignal ein Maß für die auf eine Referenzebene bezogene Winkelstellung der motorisch angetriebenen Kurbel (26) der rotatorischen Antriebseinheit (23) ist.

8. Antriebsvorrichtung nach einem der Ansprüche 4 bis 7, **dadurch gekennzeichnet, dass** ein elektronischer oder elektromechanischer Drucksensor (64) vorgesehen ist, mittels dessen der Druck in mindestens einem der durch den Kolben (44) des Hydrozylinders (41) gegeneinander abgegrenzten Druckräume (46 und 47) des Hydrozylinders (41) erfassbar ist.

9. Antriebsvorrichtung nach einem der Ansprüche 1 bis 8, **dadurch gekennzeichnet, dass** ein manuell oder elektrisch steuerbares Umschaltventil (57) vorgesehen ist, mittels dessen die beiden Druckräume (46 und 47) des Hydrozylinders (41; 41/h) miteinander kommunizierend verbindbar, alternativ dazu gegeneinander absperrbar sind.

10. Antriebseinrichtung nach Anspruch 9, **dadurch gekennzeichnet, dass** ein Druckspeicher (65) vorgesehen ist, der mit mindestens einem der Druckräume des Hydrozylinders (41; 41/h) des Schubelements (39; 39/h) ventilgesteuert verbindbar oder permanent kommunizierend verbunden ist.

## Claims

1. A drive device (10) for a blow pin (12) of a blow-moulding machine for the manufacture of bottle-shaped plastic hollow bodies, wherein in its blow-moulding configuration, the neck area for calibration is delimited externally by mould elements of the blow-mould (13), internally by a blow pin tip (18) and at the front by a radial abutting face (16) of an upper part of the blow pin (12/0) which bears the blow pin tip (18), which connects by means of the aforementioned abutting face to the blow pin tip of the blow pin, which can be moved by means of the drive device into the blowing position in the said closed state of the mould, in which the blow pin (12) is forced with a circular pinch point (19) against an upwardly expanding conical surface (21) of the blow-mould (13), which originates from a channel of the blow-mould which forms the radial outer area of the bottle neck, the diameter of which is slightly smaller, e.g. 0.1 mm, than the diameter of the pinch point (19) of the upper part of the blow pin (12/0); wherein the drive device acts as a crank drive or eccentric drive, by means of which a sliding block (31) which bears the blow pin is guided in a sliding movement, and is thereby introduced into the blow-moulding position within the blow-mould, and can then be withdrawn again therefrom, and wherein the sliding block (31) forms part of a thrust element (39; 39/h) which is displaceably connected to the blow pin, the measured axial extent of which can be set and adjusted in the direction of the common central longitudinal axis (17) of the sliding block (31) and blow pin (12), such that for the pinching force with which the pinch point (19) of the upper part of the blow pin (12/0) is pressed against the conical bearing surface of the blow-mould (13) in the blowing configuration of the blow-moulding machine, a defined value can be predetermined in a reproducible manner; the device is **characterised in that** the variable-length thrust element (39;39/h) is arranged between the axial guidance elements (38/l; 38/r) of the mould-blowing head and that the thrust element (39;39/h) comprises a hydraulic cylinder (41) with pressure chambers (46 and 47) mutually separated in a pressure-tight manner from each other by means of a piston (44), and by means of the controllable displacement of which the effective length of the thrust element (39; 39/h) can be set.

2. Drive device according to Claim 1, **characterised in that** a switching valve (57) is provided to set the length of the thrust element (39; 39/h), by means of which at least the pressure chamber (46 or 47) of the hydraulic cylinder (41; 41/h), from which pressure medium escapes during the length setting, can be shut off.

3. Drive device according to Claim 2, **characterised in that** the hydraulic cylinder (41/h) is designed as a differential cylinder, in which the piston rod (48/u) which extends on one side out of the housing is located on the mould-blowing head side, and at least the rod-side of the pressure chamber (47) can be shut off under the control of a valve.

4. Drive device according to Claim 2, **characterised in that** the hydraulic cylinder (41) is designed as a synchronous cylinder, wherein the pressurisable piston surfaces (A₁, A₂) of the mutually delimiting piston (44) of the two pressure chambers of the cylinder have the same absolute value.

5. Drive device according to Claim 4, **characterised in that** the piston (44) mutually delimiting the two pressure chambers (46 and 47) of the synchronous cylinder (41) is connected in a fixed manner with coaxial piston rods (48/o and 48/u) of the same cross-section, one of them being connected in a strain- and shear-resistant manner with the mould-blowing head (36), and the second one of them being sealed off in a sliding movement against a bore-hole (49) in the housing (43) of the hydraulic cylinder (41), in which is arranged a coiled compression spring (54), which applies an effective force on the piston (44) in the sense of a displacement thereof in the direction of the blow-mould, the absolute value of which is small when compared to the feed force which can be applied by the drive (23) on the cylinder housing.

6. Drive device according to any one of Claims 1-5, **characterised in that** an electronic or electromechanical position sensor is provided, by means of which the position of the mould-blowing head (36), and in particular the distance of the pinch point (19) of the mould-blowing head (36) from the bearing position on the conical opposing surface (21) of the blow-mould (13), can be detected.

7. Drive device according to Claim 6, **characterised in that** the position sensor is effectuated by means of an electronic or electromechanical rotational position transducer (61) integrated into the rotary drive element, the output signal of which is a measure of the relevant angular position of the motor-driven crank (26) of the rotary drive unit (23) at a reference level.

8. Drive device according to any one of Claims 4-7, **characterised in that** an electronic or electromechanical pressure sensor (64) is provided, by means of which the pressure in at least one of the pressure chambers (46 and 47) of the hydraulic cylinder (41), mutually delimited by means of the piston (44) of the hydraulic cylinder (41), can be determined.

9. Drive device according to any one of Claims 1-8, **characterised in that** a manually or electrically controllable switching valve (57) is provided, by means of which the two pressure chambers (46 and 47) of the hydraulic cylinder (41; 41/h) can be connected for communication with each other, or can alternatively be shut off from each other.

10. Drive device according to Claim 9, **characterised in that** a pressure accumulator (65) is provided, which can be connected under the control of a valve, or is permanently connected for communication with at least one of the pressure chambers of the hydraulic cylinder (41; 41/h) of the thrust element (39; 39/h).

## Revendications

1. Dispositif d'entraînement (10) dévolu au mandrin de soufflage (12) d'une machine de formage par soufflage servant à la fabrication de corps creux en matière plastique revêtant la forme de bouteilles, dans la configuration de soufflage de laquelle, en vue du calibrage, la région du goulot est bordée extérieurement par des éléments de mise en forme du moule de soufflage (13), intérieurement par une pointe (18) du mandrin de soufflage et, frontalement, par une surface extrême radiale (16) d'une partie supérieure (12/0) dudit mandrin de soufflage, portant ladite pointe (18) et se rattachant, par ladite surface extrême, à ladite pointe dudit mandrin de soufflage pouvant être déplacé, au moyen dudit dispositif d'entraînement, jusqu'à l'emplacement de soufflage qui est assigné à l'état fermé dudit moule, et auquel le mandrin de soufflage (12) est pressé, par une arête circulaire d'écrasement (19), contre une surface tronconique (21) s'élargissant vers le haut, sur le moule de soufflage (13), et partant d'un canal dudit moule de soufflage qui met en forme la région radialement extérieure du goulot des bouteilles et dont le diamètre est légèrement inférieur, par exemple de 0,1 mm, au diamètre de ladite arête d'écrasement (19) de la partie supérieure (12/0) du mandrin de soufflage, ledit dispositif d'entraînement procurant la fonction d'un entraînement à manivelle ou à excentrique au moyen duquel un coulisseau (31), portant ledit mandrin de soufflage, peut accomplir des coulissements guidés et peut, de la sorte, être inséré jusqu'à l'emplacement de soufflage à l'intérieur du moule de soufflage, puis être de nouveau extrait de ce dernier, sachant que ledit coulisseau (31) constitue une partie d'un élément de poussée (39 ; 39/h) relié audit mandrin de soufflage avec assujettissement coulissant et dont l'étendue axiale, mesurée dans la direction de l'axe médian longitudinal (17) commun audit coulisseau (31) et audit mandrin de soufflage (12), peut être modifiée et réglée de manière bien définie, de telle sorte qu'une valeur bien définie puisse être préétablie, de façon reproductible, pour la force d'écrasement avec laquelle l'arête d'écrasement (19) de la partie supérieure (12/0) dudit mandrin de soufflage est poussée contre la surface tronconique d'appui du moule de soufflage (13), dans la configuration de soufflage de ladite machine de formage par soufflage, **caractérisé par le fait que** l'élément de poussée (39 ; 39/h), de longueur variable, est interposé entre des éléments (38/1 ; 38/r) de guidage axial de la tête de soufflage ; et **par le fait que** ledit élément de poussée (39 ; 39/h) inclut un vérin hydraulique (41) pourvu de chambres de pression (46 et 47) délimitées l'une de l'autre, avec étanchéité à la pression, par un piston (44) dont le coulissement pilotable permet de régler la longueur effective dudit élément de poussée (39 ; 39/h).

2. Dispositif d'entraînement selon la revendication 1, **caractérisé par** la présence, en vue d'établir fermement la longueur de l'élément de poussée (39 ; 39/h), d'une vanne de commutation (57) au moyen de laquelle il est possible d'isoler au moins la chambre de pression (46 ou 47) du vérin hydraulique (41 ; 41/h) à partir de laquelle du fluide pressurisé s'échappe lors du réglage de ladite longueur.

3. Dispositif d'entraînement selon la revendication 2, **caractérisé par le fait que** le vérin hydraulique (41/h) est réalisé sous la forme d'un vérin différentiel dans lequel est logée la tige (48/u) de piston qui fait unilatéralement saillie au-delà du carter, côté tête de soufflage, sachant qu'au moins la chambre de pression (47), située côté tige, peut être isolée avec commande par vanne.

4. Dispositif d'entraînement selon la revendication 2, **caractérisé par le fait que** le vérin hydraulique (41) est réalisé sous la forme d'un vérin synchrone dans lequel les surfaces (A₁, A₂), sollicitées par une pression sur le piston (44) délimitant l'une de l'autre les deux chambres de pression dudit vérin, présentent la même valeur.

5. Dispositif d'entraînement selon la revendication 4, **caractérisé par le fait que** le piston (44), délimitant l'une de l'autre les deux chambres de pression (46 et 47) du vérin synchrone (41), est relié rigidement à des tiges coaxiales (48/o et 48/u) présentant une même section transversale, dont l'une est reliée à la tête de soufflage (36) avec résistance à la traction et à la poussée, et dont la seconde est rendue étanche, avec aptitude au glissement, vis-à-vis d'un alésage (49) du carter (43) dudit vérin hydraulique (41) dans lequel est logé un ressort hélicoïdal de pression (54) appliquant, audit piston (44), une force qui agit dans le sens d'un coulissement de ce dernier en direction du moule de soufflage, et dont la valeur est faible par rapport à celle de la force d'avance pouvant être appliquée audit carter du vérin, au moyen de l'entraînement (23).

6. Dispositif d'entraînement selon l'une des revendications 1 à 5, **caractérisé par** la présence d'un capteur de courses, électronique ou électromécanique, au moyen duquel il est possible de détecter l'emplacement de la tête de soufflage (36), en particulier la distance comprise entre l'arête d'écrasement (19) de ladite tête de soufflage (36) et l'emplacement d'appui, sur la surface tronconique complémentaire (21) du moule de soufflage (13).

7. Dispositif d'entraînement selon la revendication 6, **caractérisé par le fait que** le capteur de courses est mis en action au moyen d'un détecteur (61) de positions prises par rotation, électronique ou électromécanique, intégré dans l'élément rotatif d'entraînement, et dont le signal de sortie constitue une mesure de la position angulaire occupée, vis-à-vis d'un plan de référence, par la manivelle (26) à entraînement motorisé de l'unité rotative d'entraînement (23).

8. Dispositif d'entraînement selon l'une des revendications 4 à 7, **caractérisé par** la présence d'un capteur de pressions (64), électronique ou électromécanique, au moyen duquel il est possible de détecter la pression régnant dans au moins l'une des chambres de pression (46 et 47) du vérin hydraulique (41), délimitées l'une de l'autre par le piston (44) dudit vérin hydraulique (41).

9. Dispositif d'entraînement selon l'une des revendications 1 à 8, **caractérisé par** la présence d'une vanne de commutation (57) pouvant être pilotée manuellement ou électriquement, au moyen de laquelle les deux chambres de pression (46 et 47) du vérin hydraulique (41 ; 41/h) peuvent être mises en communication l'une avec l'autre ou peuvent, en variante, être isolées l'une de l'autre.

10. Dispositif d'entraînement selon la revendication 9, **caractérisé par** la présence d'un accumulateur de pression (65) pouvant être raccordé avec commande par vanne, ou relié avec communication permanente, à au moins l'une des chambres de pression du vérin hydraulique (41 ; 41/h) de l'élément de poussée (39 ; 39/h).
